(19) **Europäisches Patentamt**

**European Patent Office**

**Office européen des brevets**

(11) Veröffentlichungsnummer : **0 380 955 B1**

# (12) EUROPÄISCHE PATENTSCHRIFT

(45) Veröffentlichungstag der Patentschrift :
**27.05.92 Patentblatt 92/22**

(21) Anmeldenummer : **90100801.1**

(22) Anmeldetag : **16.01.90**

(51) Int. Cl.⁵ : **B65G 69/28**

---

(54) **Schrägrampe.**

(30) Priorität : **03.02.89 DE 3903177**

(43) Veröffentlichungstag der Anmeldung :
**08.08.90 Patentblatt 90/32**

(45) Bekanntmachung des Hinweises auf die
Patenterteilung :
**27.05.92 Patentblatt 92/22**

(84) Benannte Vertragsstaaten :
**AT BE CH DE DK ES FR GB GR IT LI LU NL SE**

(56) Entgegenhaltungen :
**DE-A- 3 506 425**

(56) Entgegenhaltungen :
**SCHWEISSEN UND SCHNEIDEN, Jahrgang 19,
Heft 9, September 1967, Seiten 423-427; P.
GÖNNER: "Verladehilfseinrichtungen aus-
Aluminium in Schweisskonstruktion"**

(73) Patentinhaber : **Alten, Kurt
Ringstrasse 14
W-3015 Wennigsen (DE)**

(72) Erfinder : **Alten, Kurt
Ringstrasse 14
W-3015 Wennigsen (DE)**

(74) Vertreter : **Depmeyer, Lothar
Auf der Höchte 30
W-3008 Garbsen 1 (DE)**

**EP 0 380 955 B1**

## Beschreibung

Die Erfindung betrifft eine ortsveränderbare, insb. verfahrbare Schrägrampe zum Be- und Entladen von gegenüber der Fahrbahn höher gelegenen Plattformen od. dgl. nach dem Oberbegriff des Anspruchs 1. (DE-A-3506425).

Es ist bekannt, in den die Verkehrsfläche bildenden Stegen der Querträger Durchbrechungen vorzusehen, deren Ränder nach oben hin abgebogen sind, um so eine Griffigkeit der Fahrbahn zu erreichen. Diese Massnahmen sind jedoch unzureichend, wenn der Anstellwinkel der Schrägrampe vergrössert z.B. bis auf 45° gesteigert werden soll.

Der Erfindung liegt die Aufgabe zugrunde, die eingangs erwähnten Schrägrampen so zu verbessern, dass ihr Anstellwinkel vergrössert werden und die dazu von der Erfindung vorgesehenen Massnahmen auch dazu beitragen können, die Tragfähigkeit der Queträger zu erhöhen.

Zur Lösung dieser Aufgabe sind erfindungsgemäss zwischen den Schenkeln benachbarter Querträger aus Metall od. dgl. bestehende Platten angeordnet, die sich nach oben hin im wesentlichen bis in den Höhenbereich der auf den Stegen befindlichen Vorsprünge erstrecken. Diese durch die ohnehin zum Zusammenschrauben der Querträger vorgesehenen Schrauben befestigten Platten versteifen die Schenkel der Querträger und dienen ihrerseits auch als Querträger. Darüber hinaus bilden sie mit ihren frei nach oben auslaufenden Enden Vorsprünge, die die Griffigkeit der Fahrbahn erheblich erhöhen. Zweckmässigerweise erstrecken sich die erwähnten Platten über die ganze Höhe der Schenkel der Querträger, damit auch eine gute gegenseitige Anlage zwischen den Platten und den Schenkeln der Querträger stattfinden kann. Auch sollten sich die Platten über die ganze Länge der Querträger erstrecken, also im wesentlich von einem zum anderen Längsträger.

Weitere Einzelheiten der Erfindung werden anhand der Zeichnung erläutert, in der ein Ausführungsbeispiel der Erfindung dargestellt ist.

Es zeigen :

Fig. 1 eine Schrägrampe in der Seitenansicht,

Fig. 2 den unteren Abschnitt der Schrägrampe in vergrössertem Masstab, und zwar ebenfalls in der Seitenansicht,

Fig. 3 eine Teildraufsicht auf den Rampenabschnitt gemäss Fig. 2 und

Fig. 4 einen Schnitt nach der Linie IV - IV von Fig. 3.

An beiden Rändern weist die Rampe einen Längsträger 1 auf, der kastenförmig ausgebildet ist.Die innere Seitenwand des Längsträgers 1 ist mit 2 bezeichnet. Der Boden 3 ist nach innen verbreitert; diese Verbreiterung 4 hat eine Länge, die etwa der Breite des Bodens 3 entspricht.

An den beiden Enden der Rampe befinden sich hohle Endstücke 5. Unter der Rampe ist ein Fahrgestell 6 angeordnet, das ggfs. ein- und ausgeklappt werden kann und zum Verfahren der Rampe dient.

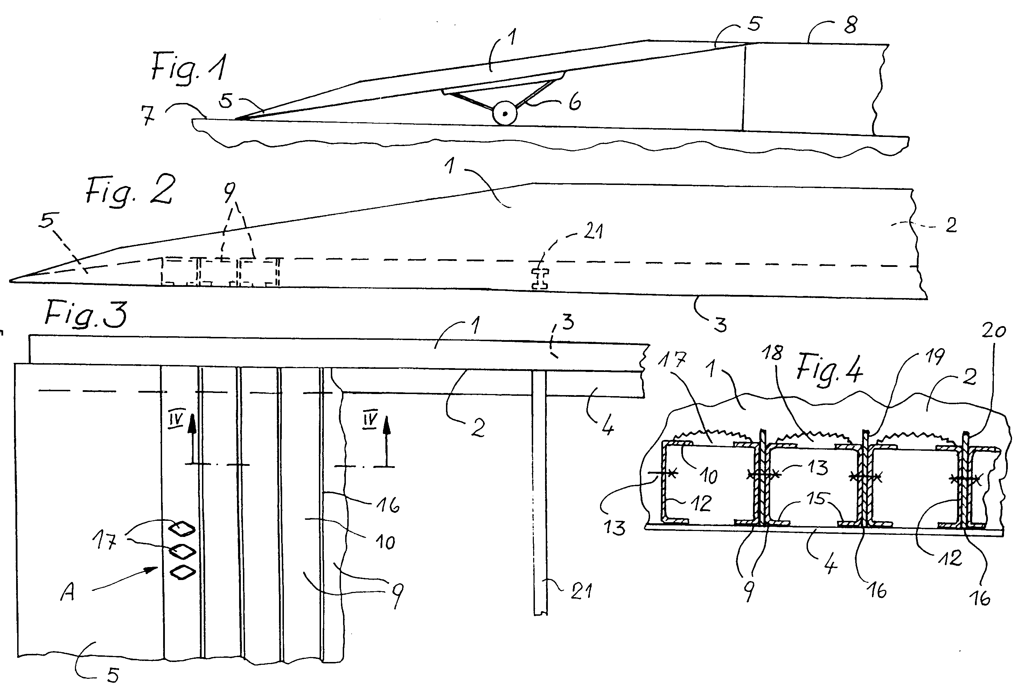

Gemäss Fig. 1 bildet die Rampe eine Fahrbahn zwischen einer Strassenoberfläche 7 od. dgl. und einer höher gelegenen Plattform 8, an deren Rand das obere Endstück 5 angreift.

Die beiden Längsträger 1 stehen zwischen den beiden Endstücken 5 durch Querträger 9 in Verbindung, die aus Stahlblech gebogen sind und einen etwa U-förmigen Querschnitt haben. Ihr oben gelegener Steg 10 bildet dabei die Verkehrsfläche der Rampe; die Schenkel 12 der Querträger 9 sind nach unten gerichtet und können mit nach innen gerichteten Abbiegungen 15 versehen sein.

Die Enden der Querträger 9 liegen auf der Verbreiterung 4 auf und stossen stumpf an die Seitenwand 2 an. Dort können Schraubverbindungen vorgesehen sein, um die Querträger 9 mit den Längsträgern 1 verbinden zu können. In diesem Bereich liegen auch die Abbiegungen 15 auf der Verbreiterung 4 auf.

Die Schenkel 12 benachbarter Queträger 9 liegen nicht unmittelbar aneinander, vielmehr liegen zwischen ihnen sich über die Trägerlänge erstreckende Platten 16, deren Höhe geringfügig grösser ist als diejenige der Schenkel 12, wobei diese Platten die Schenkel 12 nach oben hin überragen, unten jedoch mit diesen abschliessen. Die gegenseitige Verankerung der Schenkel 12 und die Verbindung mit den Platten 16 erfolgt durch Schrauben 13, die je zwei Schenkel 12 und die zwischen ihnen befindliche Platte 16 durchsetzen; dadurch werden diese Elemente fest zusammengepresst, und ein einheitlicher ,hochkant stehender Träger. kann so entstehen.

Die Stege 1o sind mit eine Vielzahl von Durchbrechungen 17 versehen; deren Ränder sind durch Verformen der Stege 1o nach oben abgewinkelt und aussen verzahnt. Diese verzahnten, die Rutschsicherheit erhöhenden Ränder sind mit 18 bezeichnet und bilden gegenüber den Stegen 1o Vorsprünge. Zur Verbesserung der Rutschsicherheit sind die oberen Ränder 19 der Platten 16 ebenfalls verzahnt; die gegenüber den Stegen 1o vorspringenden Abschnitte sind mit 2o bezeichnet.

Demgemäss dienen die Platten 16 der Erhöhung der Tragfähigkeit der Querträger 9, zumal sie mit ihren Enden auch auf den Verbreiterungen 4 aufliegen. Zudem dienen die Abschnitte 2o der Erhöhung der Griffigkeit der Fahrbahn; dies kann deshalb in besonderer Weise erfolgen, weil die Platten 16 quer zur Rampenlängsrichtung verlaufen.

Die Durchbrechungen 17 sind bei A aus Gründen der einfacheren Darstellung nur angedeutet.

Innerhalb der Querträger 9 können im Abstand voneinander schwache Querverbindungen 21 vorgesehen sein.Diese Profile haben festigkeitsmässig keine bzw. eine nur untergeordnete Bedeutung und dienen vorwiegend der besseren Montage; sie liegen auch nicht in der Verkehrsfläche.

## Patentansprüche

1. Ortsveränderbare, insb. verfahrebare Schrägrampe zum Be- und Entladen von gegenüber der Fahrbahn (7) höher gelegenen Plattformen (8) od. dgl. mit zwei zu beiden Seiten der Rampe befindlichen Längsträgern (1), die durch über die Rampenlänge verteilt angeordnete, im Querschnitt im wesentlichen U-förmige Querträger (9) verbunden sind, die zumindest den grössten Teil der Verkehrsfläche bilden, wobei die beiden durch einen die Verkehrsfläche bildenden Steg verbundenen Schenkel (12) der Querträger (9) etwa senkrecht zur Verkehrsfläche verlaufen und Schenkel (12) benachbarter Querträger (9) durch eine Verschraubung verbunden sind, dadurch gekennzeichnet, dass zwischen benachbarten Schenkeln (12) aufeinanderfolgender Querträger (9) eine Platte (16) aus Metall oder einem ähnlich festen Werkstoff angeordnet ist, die nach oben hin in den Bereich der auf den Stegen (1o) in bekannter Weise angeordneten Gleitschutzelementen (18) vorspringen und von der Verschraubung (13) für die Schenkel (12) durchsetzt sind.

2. Schrägrampe nach Anspruch 1, dadurch gekennzeichnet, dass die Platte (16) nach oben hin mit den Gleitschutzelementen (18) abschliesst.

3. Schrägrampe nach Anspruch 1, dadurch gekennzeichnet, dass die Platte (16) nach unten hin mit den Querträgern (9) abschliesst.

4. Schrägrampe nach Anspruch 1, bei der die Enden der Querträger (9) auf Vorsprüngen ( Verbreiterungen 4 ) der Längsträger aufliegen, dadurch gekennzeichnet, dass auch die Platten (16) mit ihren Enden auf den Vorsprüngen aufliegen.

5. Schrägrampe nach Anspruch 1, dadurch gekennzeichnet, dass die oberen, vorspringenden Ränder der Platte (16) mit Gleitschutzelementen, insb. mit einer Zackung versehen ist.

6. Schrägrampe nach Anspruch 1 und 2, dadurch gekennzeichnet, dass die Platte (16) über ihre gesamte wirksame Länge gegenüber den Stegen (1o) der Querträger (9) vorspringt, während die Gleitschutzelemente der Stege im Abstand voneinander über die Trägerlänge verteilt angeordnet sind.

7. Schrägrampe nach Anspruch 1, dadurch gekennzeichnet, dass die Platte (16) fest zwischen den Schenkeln (12) eingeklemmt ist.

## Claims

1. Movable, more especially transportable, inclined ramp for loading and unloading platforms (8) or the like, which are situated higher than the roadway (7), said ramp having two longitudinal support members (1), which are situated on each side of the ramp and are joined by means of transverse support members (9) distributed over the length of the ramp and having a substantially U-shaped cross-section, said transverse support members forming at least the greatest part of the vehicular surface, the two arms (12) of the transverse support members (9), which are joined by means of a cross-piece member forming the vehicular surface, extending substantially at right angles to the vehicular surface, and arms (12) of adjacent transverse support members (9) being joined by means of a screw coupling, characterised in that a plate (16), formed from metal or a similar solid material, is disposed between adjacent arms (12) of successive transverse support members (9), which plates protrude upwardly into the region of the antiskid elements (18), which are disposed on the cross-piece members (10) in known manner, and have the screw coupling (13) for the arms (12) extending therethrough.

2. Inclined ramp according to claim 1, characterised in that the plate (16) terminates upwardly with the antiskid elements (18).

3. Inclined ramp according to claim 1, characterised in that the plate (16) terminates downwardly with the transverse support members (9).

4. Inclined ramp according to claim 1, wherein the ends of the transverse support members (9) lie on projections (widened portions 4) of the longitudinal support members, characterised in that the plates (16) also lie with their ends on the projections.

5. Inclined ramp according to claim 1, characterised in that the upper, protruding edges of the plate (16) are provided with antiskid elements, more especially with a serrated edge.

6. Inclined ramp according to claims 1 and 2, characterised in that the plate (16) protrudes over its entire effective length relative to the cross-piece members (10) of the transverse support members (9), while the antiskid elements of the cross-piece members are distributed over the length of the support members and are spaced from one another.

7. Inclined ramp according to claim 1, characterised in that the plate (16) is firmly clamped in position between the arms (12).


**Revendications**

1. Rampe inclinée dont on peut changer l'emplacement, notamment mobile, pour charger et pour décharger des plate-formes (8) ou analogues surélevées par rapport à la chaussée (7), comportant deux longerons (1) qui se trouvent de part et d'autre de la rampe et qui sont reliés par des traverses (9), de section transversale sensiblement en forme de U, réparties sur la longueur de la rampe et formant au moins la plus grande partie de la surface de circulation, les deux branches (12) des traverses (9), qui sont reliées par une âme formant la surface de circulation, s'étendant à peu près perpendiculairement à la surface de circulation et les branches (12) de deux traverses (9) voisines étant reliées par un vissage, caractérisée en ce qu'entre des branches (12) voisines de traverses (9) successives est interposée une plaque (16) en métal ou en un matériau rigide analogue, ces plaques faisant saillie vers le haut dans la région des éléments antidérapants (18) disposés, d'une manière connue en soi, sur les âmes (10) et étant traversées par le vissage (13) pour les branches (12).

2. Rampe inclinée suivant la revendication 1, caractérisée en ce que la plaque (16) est à affleurement vers le haut avec,les éléments antidérapants (18).

3. Rampe inclinée suivant la revendication 1, caractérisée en ce que la plaque (16) est à affleurement vers le bas avec les traverses (9).

4. Rampe inclinée suivant la revendication 1, dans laquelle les extrémités des traverses s'appliquent sur des parties saillantes (parties élargies 4) des longerons, caractérisée en ce que les plaques (16) s'appliquent également par leurs extrémités sur les parties saillantes.

5. Rampe inclinée suivant la revendication 1, caractérisée en ce que les bords supérieurs en saillie des plaques (16) sont munis d'éléments antidérapants, notamment d'une dentelure.

6. Rampe inclinée suivant la revendication 1 ou 2, caractérisée en ce que la plaque (16) dépasse, sur toute sa longueur efficace, des âmes (10) des traverses (9), tandis que les éléments antidérapants des âmes sont disposés à distance les uns des autres en étant répartis sur la longueur des traverses.

7. Rampe inclinée suivant la revendication 1, caractérisée en ce que la plaque (16) est bloquée rigidement entre les branches (12).

Fig. 1

Fig. 2

Fig. 3

Fig. 4

EP 0 380 955 B1